# EUROPEAN PATENT SPECIFICATION

(11) **EP 4 091 838 B1**
(45) Date of publication and mention of the grant of the patent: **30.10.2024**
(21) Application number: 22170357.2
(22) Date of filing: 27.04.2022
(51) Int. Cl.: B60C 9/22, B60C 9/20

(54) **TIRE**
REIFEN
PNEUMATIQUE

(30) Priority: 18.05.2021 JP 2021084142
(43) Date of publication of application: 23.11.2022
(73) Proprietor: Sumitomo Rubber Industries, Ltd., Kobe-shi, Hyogo-ken 651-0072 (JP)
(72) Inventor: MIAO, Dong, Kobe-shi, Hyogo, 651-0072 (JP); SUZUKI, Masumi, Kobe-shi, Hyogo, 651-0072 (JP); MIKI, Takashi, Kobe-shi, 651-0072 (JP); MISAKI, Momoka, Kobe-shi, 651-0072 (JP)
(74) Representative: Manitz Finsterwald Patent- und Rechtsanwaltspartnerschaft mbB

(56) References cited:
- JP-A- 2016 203 687
- US-A1- 2018 022 157
- US-A1- 2018 022 160
- US-B2- 9 919 563

## Description

### BACKGROUND OF THE INVENTION

### Field of the Invention

The present invention relates to a tire including a belt layer and a band layer.

### Background Art

Conventionally, tires in each of which a belt layer and a band layer are provided on an inner side in a tire radial direction of a tread portion, have been known. For example, Japanese Laid-Open Patent Publication No. 2019-177838 proposes a tire in which a belt composed of two or more layers includes cords and a gauge between cords of two adjacent ones of the layers is specified so that both noise performance and low fuel consumption performance can be attained.

However, regarding the tire in Japanese Laid-Open Patent Publication No. 2019-177838 as well, further enhancement of ride comfort and low fuel consumption performance during high-speed running has been desired in recent years in association with improvement in vehicle performances and development of infrastructures such as expressways.
US 9 919 563 B2 discloses a tire comprising the features according to the preamble of claim 1.
JP 2016 203687 A discloses a tire comprising features according to a related technology.
US 2018/0022157 A1 also discloses a tire comprising features according to a related technology.
US 2018/0022160 A1 also discloses a tire comprising features according to a related technology.

### SUMMARY OF THE INVENTION

The present invention has been made in view of the above circumstances, and a main object of the present invention is to provide a tire capable of attaining both ride comfort and low fuel consumption performance during high-speed running.

This object is satisfied by a tire comprising the features of claim 1.
The tire includes: a belt layer; and a band layer. The belt layer includes at least one belt ply.
The belt ply includes belt cords each formed of a single steel wire. The band layer includes at least one band ply. The band ply includes band cords each formed of an organic fiber and each disposed at an angle not larger than 5° relative to a tire circumferential direction. A diameter in a tire radial direction of each band cord is not smaller than 0.70 mm.

In the tire of the present invention, it is desirable that the diameter in the tire radial direction of each band cord is not larger than 1.00 mm.

In the tire of the present invention, it is desirable that each band cord is a hybrid cord obtained by twisting together a first material and a second material different from the first material.

In the tire of the present invention, it is desirable that the band cords include: a first cord formed from a first material; and a second cord formed from a second material different from the first material.

In the tire of the present invention, it is desirable that the first material is a heat-shrinkable material, and the second material is a non-heat-shrinkable material.

In the tire of the present invention, it is desirable that a modulus of the second material is different from a modulus of the first material.

In the tire of the present invention, it is desirable that the first material is nylon, and the second material is aramid.

In the tire of the present invention, it is desirable that the band ply has 35 to 65 of the band cords arranged per a ply width of 5 cm.

In the tire of the present invention, it is desirable that, in the band ply, a product of the diameter (mm) of the band cord, the number of the band cords that are arranged per a ply width of 5 cm, and a distance (mm) on a tire equator from an outer surface of a tread portion to the band ply, is not smaller than 150.

In the tire of the present invention, it is desirable that an elongation of each band cord under a load of 66 N is not lower than 2.5%.

In the tire of the present invention, it is desirable that an elongation of each band cord under a load of 198 N is not higher than 7.0%.

In the tire of the present invention, it is desirable that a diameter in the tire radial direction of each belt cord is 0.16 to 0.50 mm.

In the tire of the present invention, it is desirable that the belt ply has 55 to 150 of the belt cords arranged per a ply width of 5 cm.

In the tire of the present invention, it is desirable that, in the belt ply, a product of a diameter (mm) in the tire radial direction of each belt cord and the number of the belt cords that are arranged per a ply width of 5 cm, is 10 to 45.

In the tire of the present invention, the belt layer includes at least one belt ply, and the belt ply includes belt cords each formed of a single steel wire. In such a belt layer, the belt cords are less likely to be elongated even when the thickness in the tire radial direction of the belt layer is reduced to reduce the weight of the tire. Consequently, the belt layer makes it possible to, during high-speed running, stabilize the shape of the tread portion and reduce rolling resistance. Further, since the shape of the tread portion during high-speed running is stable, such a tire can improve also ride comfort during high-speed running.

In the tire of the present invention, the band layer includes at least one band ply, the band ply includes band cords each formed of an organic fiber and each disposed at an angle not larger than 5° relative to the tire circumferential direction, and the diameter in the tire radial direction of each band cord is not smaller than 0.70 mm.

Such a band layer makes it possible to improve the holding performance of the tread portion and reduce the deformation amount of the tread portion during high-speed running, whereby, during high-speed running, the rolling resistance of the tire can be reduced and ride comfort of the tire can be improved. Further, the band layer tightens, through the band cords each having a diameter not smaller than 0.70 mm, the belt cords each formed of a single steel wire. Thus, the effect of tightening the belt layer can be further intensified. Therefore, the tire of the present invention can attain both ride comfort and low fuel consumption performance during high-speed running.

### BRIEF DESCRIPTION OF THE DRAWINGS

FIG. 1 is a cross-sectional view of a tire according to one embodiment of the present invention;
FIG. 2 is a cross-sectional view of a belt layer and a band layer, which band layer, however, does not form part of the present invention;
FIG. 3 is a cross-sectional view of a belt layer and a band, which band layer, however, does not form part of the present invention; and
FIG. 4 is a schematic view of a band cord according to the present invention.

### DETAILED DESCRIPTION

Hereinafter, one embodiment of the present invention will be described in detail with reference to the drawings.

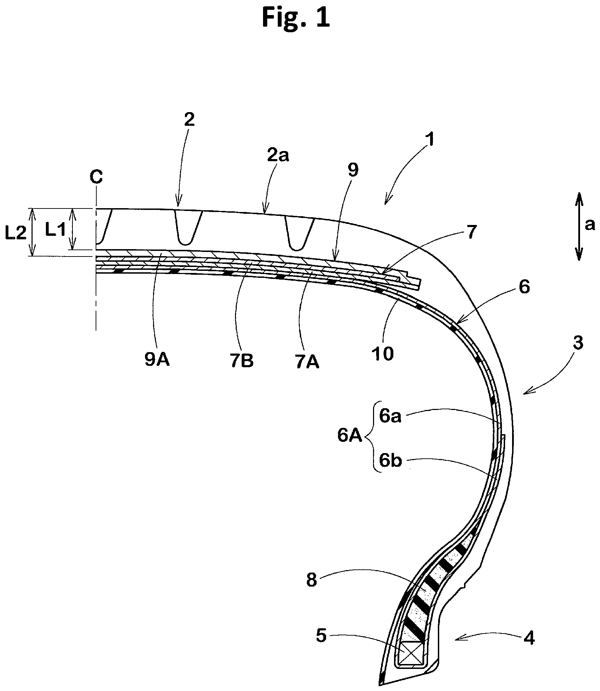

FIG. 1 is a tire meridian cross-sectional view including a rotation axis when a tire 1 of the present embodiment is in a normal state. Here, if the tire 1 is a pneumatic tire formed from rubber, the "normal state" refers to a state where the tire 1 is mounted to a normal rim and adjusted to have a normal internal pressure, and no load is applied to the tire 1. Hereinafter, dimensions of parts of the tire 1 and the like are values measured in the normal state, unless otherwise noted.

If there is a standard system including a standard on which the tire 1 is based, the "normal rim" is a rim defined for each tire by the standard. For example, the normal rim is the "standard rim" in the JATMA standard, the "Design Rim" in the TRA standard, or the "Measuring Rim" in the ETRTO standard.

If there is a standard system including a standard on which the tire 1 is based, the "normal internal pressure" is an air pressure defined for each tire by the standard. The normal internal pressure is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The tire 1 of the present embodiment is suitably used as a tire for passenger cars. Here, in the present description, the tire for passenger cars refers to a pneumatic tire, formed from rubber, that is assumed to be mounted to a four-wheel-drive automobile and that has a normal load not higher than 1000 kg. Although the tire for passenger cars is not particularly limited as long as the tire has a normal load not higher than 1000 kg, the tire 1 is preferably applied to a tire for passenger cars having a normal load of 900 kg, more preferably applied to a tire for passenger cars having a normal load of 750 kg, and further preferably applied to a tire for passenger cars having a normal load of 700 kg from the viewpoint of inhibiting excessive deformation in a tread portion 2.

The "normal load" refers to a load that is defined, in a standard system including a standard on which the tire 1 is based, for each tire by the standard. The normal load is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The tire 1 is not limited to the tire for passenger cars and is applicable to, for example, various tires such as a heavy-duty tire, a tire for motorcycles, a tire formed from resin, a non-pneumatic tire the inside of which is not filled with pressurized air, and a racing tire.

As shown in FIG. 1, the tire 1 of the present embodiment includes: the tread portion 2 annularly extending; a pair of sidewall portions 3 extending from both sides of the tread portion 2; and a pair of bead portions 4 extending so as to be contiguous with the sidewall portions 3. The tire 1 of the present embodiment further includes: a toroidal carcass 6 extending on and between bead cores 5 of the pair of bead portions 4; and a belt layer 7 disposed on an outer side in a tire radial direction of the carcass 6 and on an inner side in the tire radial direction of the tread portion 2.

The tread portion 2 is desirably formed of at least one elastomer layer. The tread portion 2 may, for example, be formed of two or more elastomer layers stacked in the tire radial direction or have a plurality of elastomer layers arranged in a tire axial direction.

Examples of a component of the elastomer layer of the tread portion 2 include: isoprene-based rubbers such as natural rubber and isoprene rubber; and diene-based rubbers such as butadiene rubber, styrene-butadiene rubber, styrene-isoprene-butadiene rubber, chloroprene rubber, acrylonitrile-butadiene rubber, and isobutylene-isoprene rubber.

Each sidewall portion 3 is desirably formed of at least one elastomer layer. The sidewall portion 3 may, for example, be formed of two or more elastomer layers stacked in the tire axial direction or have a plurality of elastomer layers arranged in the tire radial direction. The elastomer layer of the sidewall portion 3 may be formed from, for example, a component that is identical to or different from the component of the elastomer layer of the tread portion 2.

Regarding a boundary surface between the elastomer layer of the tread portion 2 and the elastomer layer of the sidewall portion 3, for example, the outer end side in the tire axial direction of the boundary surface is located closer to the outer side in the tire radial direction than the inner end side in the tire axial direction of the boundary surface is. Regarding the boundary surface between the elastomer layer of the tread portion 2 and the elastomer layer of the sidewall portion 3, for example, the outer end side in the tire axial direction of the boundary surface may be located closer to the inner side in the tire radial direction than the inner end side in the tire axial direction of the boundary surface is.

The carcass 6 includes at least one carcass ply. In the present embodiment, the carcass 6 includes one carcass ply 6A. The carcass ply 6A is formed of, for example, an elastomer layer including carcass cords (not shown) each disposed at an angle of 75 to 90° relative to a tire circumferential direction. As each carcass cord, an organic fiber cord formed from, for example, aromatic polyamide (aramid), rayon, or polyester can be used. Here, in the present description, the phrase "A to B" means being "not smaller (lower) than A and not larger (higher) than B".

The carcass ply 6A includes, for example, a body portion 6a extending from the tread portion 2 through the sidewall portions 3 to the bead cores 5 of the bead portions 4, and turned-up portions 6b contiguous with the body portion 6a and turned up around the bead cores 5 from the inner side to the outer side thereof in the tire axial direction. Between the body portion 6a and each turned-up portion 6b of the carcass ply 6A, for example, a bead apex 8 extending from the corresponding bead core 5 to the outer side in the tire radial direction is disposed. The bead apex 8 is formed of, for example, an elastomer layer.

Each bead portion 4 may be provided with, for example, a bead reinforcing layer (not shown) on the outer side in the tire axial direction of the corresponding turned-up portion 6b of the carcass 6. The bead reinforcing layer may be formed of, for example, an elastomer layer formed from a component that is identical to or different from a component of the elastomer layer of the bead apex 8.

The bead portion 4 may be provided with, for example, a chafer (not shown) on the outer side in the tire axial direction of the turned-up portion 6b of the carcass 6. In the case where the bead reinforcing layer and the chafer are provided, the chafer is desirably located closer to the outer side in the tire axial direction than the bead reinforcing layer is.

The tire 1 of the present embodiment includes an inner liner 10 on the inner side of the carcass 6. The inner liner 10 is desirably formed of an air-impermeable elastomer layer. Examples of a component of the elastomer layer of the inner liner 10 include isobutylene-isoprene rubber, halogenated isobutylene-isoprene rubber, and the like. Such an inner liner 10 can retain the air pressure with which the tire 1 is filled.

The belt layer 7 includes at least one belt ply. In the present embodiment, the belt layer 7 includes two belt plies 7A and 7B. The two belt plies 7A and 7B are, for example, a first belt ply 7A located on the inner side in the tire radial direction and a second belt ply 7B located on the outer side in the tire radial direction of the first belt ply 7A. Such a belt layer 7 can increase the rigidity of the tread portion 2 and improve the steering stability of the tire 1 during high-speed running.

A band layer 9 is disposed on the inner side in the tire radial direction of the tread portion 2. The band layer 9 includes at least one band ply. In the present embodiment, the band layer 9 includes one band ply 9A. Such a band layer 9 can increase the holding performance of the tread portion 2 even during high-speed running and attain both ride comfort and low fuel consumption performance of the tire 1 during high-speed running.

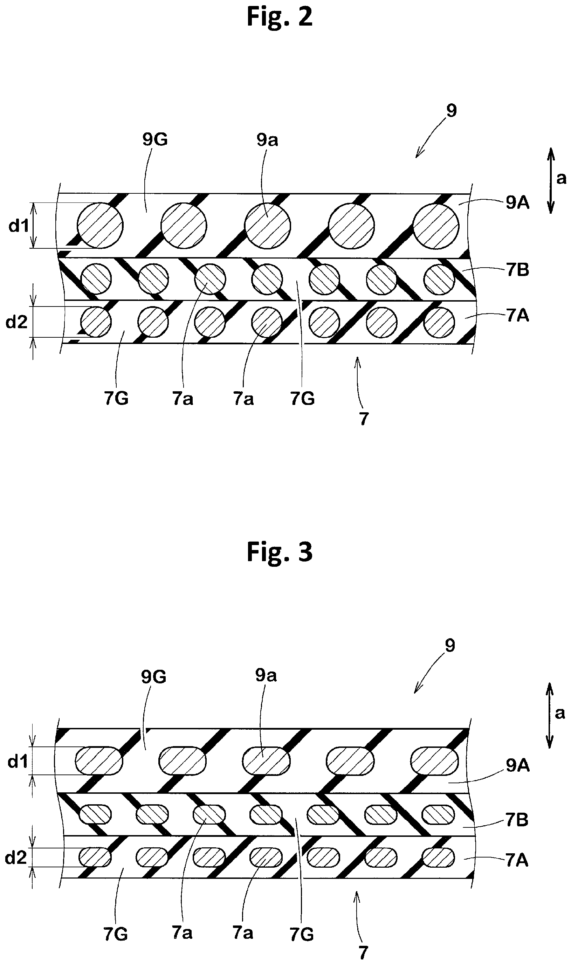

FIG. 2 is a cross-sectional view of the belt layer 7 and the band layer 9, which band layer, however, does not form part of the present invention. FIG. 3 is a cross-sectional view of a belt layer 7 and a band layer 9, which band layer, however, does not form part of the present invention. As shown in FIG. 2 and FIG. 3, the belt layer 7 in each embodiment includes: belt cords 7a each formed of a single steel wire; and an elastomer composition 7G coating the belt cords 7a.

Such belt plies 7A and 7B are less likely to be elongated than cords formed of stranded wires and enable great reaction force to be generated when being deformed in a shearing direction. Consequently, the steering stability of the tire 1 during high-speed running can be improved.

The elastomer composition 7G of each of the belt plies 7A and 7B in the present embodiment exhibits rubber elasticity. Examples of the elastomer composition 7G include rubber compositions, thermoplastic elastomer compositions, and the like. If the elastomer composition 7G is a rubber composition, examples of the rubber component thereof include isoprene-based rubber, butadiene-based rubber, styrene-butadiene rubber, nitrile rubber, isobutylene-isoprene rubber, and the like. If the elastomer composition 7G is a thermoplastic elastomer composition, examples of the elastomer thereof include: block copolymers such as thermoplastic polyurethane, styrene-butadiene copolymer, and styrene-ethylene/butylene-styrene copolymer; and the like.

Each belt cord 7a in the present embodiment is plated or plated with three elements. Examples of the plating include: one that involves use of zinc or copper; and the like. Examples of the plating with three elements include: one that involves use of zinc, copper, and cobalt; and the like. Such a belt cord 7a has a favorable adhesiveness to the elastomer composition 7G, and stress can be generated as a result of cooperation between the belt cord 7a and the elastomer composition 7G also during high-speed running. Thus, the steering stability of the tire 1 during high-speed running can be improved.

Each belt cord 7a in FIG. 2 has a cross section with a circular shape, and each belt cord 7a in FIG. 3 has a cross section with a flattened shape. Here, in the present description, the circular shape means that the ratio between the major axis and the minor axis of the cross section is lower than 1.05, and the flattened shape means that the ratio between the major axis and the minor axis of the cross section is not lower than 1.05.

The band ply 9A in the present embodiment includes: band cords 9a each disposed at an angle not larger than 5° relative to the tire circumferential direction; and an elastomer composition 9G coating the band cords 9a. Here, the angle of each band cord 9a is an angle obtained when the tire 1 is in the normal state. The angle can be ascertained by, for example, partially peeling the tread portion 2.

The elastomer composition 9G of the band ply 9A is desirably one that exhibits rubber elasticity in the same manner as the elastomer composition 7G of each of the belt plies 7A and 7B. Examples of the elastomer composition 9G include the same compositions as those exemplifying the elastomer composition 7G.

Each band cord 9a of the unclaimed example as shown in FIG. 2 has a cross section with a circular shape, whereas each band cord 9a according to the invention as shown in FIG. 3 has a cross section with a flattened shape. The band cord 9a is formed of, for example, an organic fiber. A diameter d1 in the tire radial direction (a) of the band cord 9a is preferably not smaller than 0.70 mm.

Here, in the case of a band cord 9a having a cross section with a circular shape such as one in FIG. 2, the diameter d1 in the tire radial direction (a) of the band cord 9a is the diameter of the cross section. Meanwhile, in the case of a band cord 9a having a cross section with a flattened shape such as one in FIG. 3, the diameter d1 in the tire radial direction (a) of the band cord 9a is a diameter of the cross section along the tire radial direction (a). Meanwhile, in the case of a band cord 9a obtained by twisting together a plurality of cords, the diameter d1 in the tire radial direction (a) of the band cord 9a is an outer diameter defined by an imaginary line that is obtained when gaps between the plurality of cords are filled.

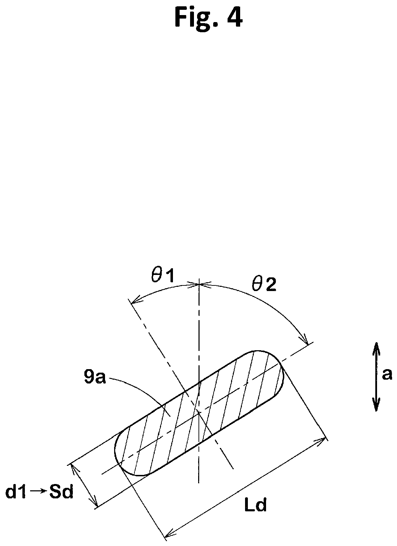

FIG. 4 is a schematic view of a band cord 9a according to the present invention. As shown in FIG. 4, the band cord 9a having the cross section with the flattened shape according to the invention is disposed so as to be tilted relative to the tire radial direction (a), an axis that is at a smaller angle relative to the tire radial direction (a) out of a minor axis Sd and a major axis Ld of the band cord 9a having the cross section with the flattened shape, is defined as the diameter d1 in the tire radial direction (a). In FIG. 4, an angle θ1 of the direction of the minor axis Sd relative to the tire radial direction (a) is smaller than an angle θ2 of the direction of the major axis Ld relative to the tire radial direction (a), and thus the minor axis Sd is defined as the diameter d1 in the tire radial direction (a).

Such a band layer 9 makes it possible to improve the holding performance of the tread portion 2 and reduce the deformation amount of the tread portion 2 during high-speed running, whereby, during high-speed running, the rolling resistance of the tire 1 can be reduced and ride comfort of the tire 1 can be improved. Therefore, the tire 1 of the present embodiment can attain both ride comfort and low fuel consumption performance during high-speed running.

As shown in FIG. 2 and FIG. 3, since the diameter d1 in the tire radial direction (a) of the band cord 9a is not smaller than 0.70 mm, the holding performance of the tread portion 2 is assuredly improved, whereby both low fuel consumption performance and ride comfort of the tire 1 during high-speed running can be attained. From this viewpoint, the diameter d1 of the band cord 9a is more preferably not smaller than 0.75 mm and further preferably not smaller than 0.80 mm.

The diameter d1 in the tire radial direction (a) of the band cord 9a is preferably not larger than 1.00 mm. If the diameter d1 in the tire radial direction (a) of the band cord 9a is not larger than 1.00 mm, increase of the thickness of the tread portion 2 is suppressed, whereby the rolling resistance of the tire 1 during high-speed running can be assuredly reduced. From this viewpoint, the diameter d1 of the band cord 9a is more preferably not larger than 0.95 mm and further preferably not larger than 0.90 mm.

The band ply 9A preferably has 35 to 65 of the band cords 9a arranged per a ply width of 5 cm. Here, the number n1 of the band cords 9a that are arranged per a ply width of 5 cm is the number of the band cords 9a that are arranged per a ply width of 5 cm in a direction perpendicular to the longitudinal direction of each band cord 9a. The number n1 of the band cords 9a that are arranged can be obtained as, for example, a number measured within a range, of the band ply 9A, that includes the tire equator C.

If the number n1 of the band cords 9a that are arranged per a ply width of 5 cm is not smaller than 35, the holding performance of the tread portion 2 is assuredly improved, whereby both low fuel consumption performance and ride comfort of the tire 1 during high-speed running can be attained. From this viewpoint, the number n1 of the band cords 9a that are arranged is more preferably not smaller than 40 and further preferably not smaller than 45.

If the number n1 of the band cords 9a that are arranged per a ply width of 5 cm is not larger than 65, the rigidity of the tread portion 2 is inhibited from excessively increasing, whereby the ride comfort of the tire 1 during high-speed running can be improved. From this viewpoint, the number n1 of the band cords 9a that are arranged is more preferably not larger than 60 and further preferably not larger than 55.

In the band ply 9A, a product (d1×n1) of the diameter d1 (mm) in the tire radial direction (a) of each band cord 9a and the number n1 of the band cords 9a that are arranged per a ply width of 5 cm, is preferably 25 to 60. Such a product (d1 ×n1) is a proportion of the band cords 9a with respect to the width direction of the band ply 9A and is an index regarding an interval between adjacent ones of the band cords 9a.

If the product (d1 ×n1) is not smaller than 25, the holding performance of the tread portion 2 is assuredly improved, whereby both low fuel consumption performance and ride comfort of the tire 1 during high-speed running can be attained. From this viewpoint, the product (d1×n1) is more preferably not smaller than 35 and further preferably not smaller than 40.

If the product (d1×n1) is not larger than 60, vibrations and excessive increase in rigidity due to a short interval between the band cords 9a are inhibited, whereby the ride comfort of the tire 1 during high-speed running can be improved. From this viewpoint, the product (d1×n1) is more preferably not larger than 50.

As shown in FIG. 1 to FIG. 3, a product (d1×n1×L1) of the above product (d1×n1) and a distance L1 (mm) on the tire equator C from an outer surface 2a of the tread portion 2 to the band ply 9A, is preferably not smaller than 150. Such a product (d1×n1×L1) is an index of the holding performance of the tread portion 2.

Here, the distance L1 is a linear distance on the tire equator C from the outer surface 2a of the tread portion 2 to the band layer 9. If a groove is present on the tire equator C, the distance L1 is a linear distance from an imaginary line obtained when the groove is filled. The distance L1 is also called a gauge of the tread portion 2 and is an index of the rubber thickness of the tread portion 2.

If the product (d1×n1×L1) is not smaller than 150, sufficient holding performance is exhibited by the tread portion 2 during high-speed running even in the case where the gauge (distance L1) of the tread portion 2 is small. Consequently, both ride comfort and low fuel consumption performance of the tire 1 during high-speed running can be attained. From this viewpoint, the product (d1×n1×L1) is more preferably not smaller than 200 and further preferably not smaller than 280.

The product (d1×n1×L1) is preferably not larger than 450. If the product (d1×n1×L1) is not larger than 450, the band layer 9 exhibits sufficient flexibility even in the case where the gauge (distance L1) of the tread portion 2 is large. Consequently, both ride comfort and low fuel consumption performance of the tire 1 during high-speed running can be attained. From this viewpoint, the product (d1×n1×L1) is more preferably not larger than 430.

An elongation of each band cord 9a under a load of 66 N is preferably not lower than 2.5%. If the elongation of the band cord 9a under a load of 66 N is not lower than 2.5%, the band cord 9a is elongated also at the time of extension of the tire 1 during vulcanization-molding, whereby the band cord 9a can be inhibited from coming into contact with any of the belt cords 7a. From this viewpoint, the elongation of the band cord 9a under a load of 66 N is more preferably not lower than 3.0% and further preferably not lower than 3.5%.

An elongation of the band cord 9a under a load of 198 N is preferably not higher than 7.0%. If the elongation of the band cord 9a under a load of 198 N is not higher than 7.0%, sufficient holding performance is exhibited by the tread portion 2 during high-speed running, whereby both ride comfort and low fuel consumption performance of the tire 1 during high-speed running can be attained. From this viewpoint, the elongation under a load of 198 N is more preferably not higher than 6.5% and further preferably not higher than 6.0%.

The band cord 9a in the present embodiment is a hybrid cord obtained by twisting together a first material and a second material different from the first material. The first material and the second material having different characteristics make it possible to provide, as the band cord 9a, a band cord that is suitable for attaining both ride comfort and low fuel consumption performance of the tire 1 during high-speed running.

In the present embodiment, a modulus of the second material is different from a modulus of the first material. Such a band cord 9a can reduce, by a material thereof having the higher modulus, the deformation amount of the tread portion 2 that is based on increase in internal pressure during high-speed running. Meanwhile, such a band cord 9a can mitigate, by a material thereof having the lower modulus, input from a road surface. Thus, the tire 1 can attain both ride comfort and low fuel consumption performance during high-speed running.

The modulus of the second material is higher than the modulus of the first material, for example. The modulus of the second material is preferably not lower than 2 times, more preferably not lower than 10 times, and further preferably not lower than 30 times the modulus of the first material. Such a band cord 9a serves to attain both ride comfort and low fuel consumption performance of the tire 1 during high-speed running.

The first material is, for example, a heat-shrinkable material. The second material is, for example, a non-heat-shrinkable material. Since the band cord 9a includes the heat-shrinkable material and the non-heat-shrinkable material, such a band cord 9a moderately shrinks owing to heat generated during high-speed running, whereby the holding performance during high-speed running can be improved.

Suitable examples of the first material include aliphatic polyamide (nylon), polyester, and the like. The nylon or the polyester as the first material preferably takes the form of a bunch of filaments having a thickness not lower than 940 dtex. The first material is desirably formed as one or more bunches of nylon filaments. Such a first material makes it possible to reduce cost and exhibit the above effects.

Suitable examples of the second material include aromatic polyamide (aramid). The aramid as the second material preferably takes the form of a bunch of filaments having a thickness not lower than 1100 dtex. The second material is desirably formed as two or more bunches of aramid filaments. Such a second material makes it possible to reduce cost and exhibit the above effects.

The band cords 9a are not limited to the above hybrid cords and may include, for example, a first cord formed from the first material and a second cord formed from the second material different from the first material. The first material and the second material having different characteristics make it possible to provide, as such band cords 9a as well, band cords suitable for attaining both ride comfort and low fuel consumption performance of the tire 1 during high-speed running.

As shown in FIG. 2 and FIG. 3, the belt cords 7a are each disposed at, for example, an angle of 10 to 30° relative to the tire circumferential direction. Each belt cord 7a of the first belt ply 7A and each belt cord 7a of the second belt ply 7B are desirably tilted in mutually opposite directions relative to the tire circumferential direction. Such a belt layer 7 increases the rigidity of the tread portion 2 in a balanced manner, whereby the steering stability of the tire 1 during high-speed running can be improved. Here, the angle of each belt cord 7a is an angle obtained when the tire 1 is in the normal state. The angle can be ascertained by, for example, partially peeling the tread portion 2.

A diameter d2 in the tire radial direction (a) of the belt cord 7a is preferably 0.16 to 0.50 mm. Here, in the case of a belt cord 7a having a cross section with a circular shape such as one in FIG. 2, the diameter d2 in the tire radial direction (a) of the belt cord 7a is the diameter of the cross section. Meanwhile, in the case of a belt cord 7a having a cross section with a flattened shape such as one in FIG. 3, the diameter d2 in the tire radial direction (a) of the belt cord 7a is a diameter of the cross section along the tire radial direction (a).

Although not shown, if the belt cord 7a having the cross section with the flattened shape is disposed so as to be tilted relative to the tire radial direction (a), an axis that is at a smaller angle relative to the tire radial direction (a) out of the minor axis and the major axis of the belt cord 7a having the cross section with the flattened shape, is defined as the diameter d2 in the tire radial direction (a) (see FIG. 4).

If the diameter d2 in the tire radial direction (a) of the belt cord 7a is not smaller than 0.16 mm, the deformation amount of the tread portion 2 during high-speed running can be reduced, and the rolling resistance of the tire 1 during high-speed running can be reduced. From this viewpoint, the diameter d2 of the belt cord 7a is more preferably not smaller than 0.18 mm and further preferably not smaller than 0.20 mm.

If the diameter d2 in the tire radial direction (a) of the belt cord 7a is not larger than 0.50 mm, vibrations of the tread portion 2 during high-speed running can be absorbed, whereby the ride comfort of the tire 1 during high-speed running can be improved. From this viewpoint, the diameter d2 of the belt cord 7a is more preferably not larger than 0.45 mm and further preferably not larger than 0.40 mm.

Each of the belt plies 7A and 7B preferably has 55 to 150 of the belt cords 7a arranged per a ply width of 5 cm. Here, the number n2 of the belt cords 7a that are arranged per a ply width of 5 cm is the number of the belt cords 7a that are arranged per a ply width of 5 cm in a direction perpendicular to the longitudinal direction of each belt cord 7a. The number n2 of the belt cords 7a that are arranged can be obtained as, for example, a number measured within a range, of the belt ply 7A, 7B, that includes the tire equator C.

If the number n2 of the belt cords 7a that are arranged per a ply width of 5 cm is not smaller than 55, the deformation amount of the tread portion 2 during high-speed running can be reduced, and the rolling resistance of the tire 1 during high-speed running can be reduced. From this viewpoint, the number n2 of the belt cords 7a that are arranged is more preferably not smaller than 65 and further preferably not smaller than 75.

If the number n2 of the belt cords 7a that are arranged per a ply width of 5 cm is not larger than 150, the rigidity of the tread portion 2 is inhibited from excessively increasing, whereby the ride comfort of the tire 1 can be improved. From this viewpoint, the number n2 of the belt cords 7a that are arranged is more preferably not larger than 140 and further preferably not larger than 120.

In each of the belt plies 7A and 7B, a product (d2×n2) of the diameter d2 in the tire radial direction (a) of each belt cord 7a (mm) and the number n2 of the belt cords 7a that are arranged per a ply width of 5 cm, is preferably 10 to 45. Such a product (d2×n2) is a proportion of the belt cords 7a with respect to the width direction of the belt ply 7A, 7B and is an index regarding an interval between adjacent ones of the belt cords 7a.

If the product (d2×n2) is not smaller than 10, the holding performance of the tread portion 2 is assuredly improved, whereby both low fuel consumption performance and ride comfort of the tire 1 can be attained. From this viewpoint, the product (d2×n2) is more preferably not smaller than 15 and further preferably not smaller than 20.

If the product (d2×n2) is not larger than 45, vibrations and excessive increase in rigidity due to a short interval between the belt cords 7a are inhibited, whereby the ride comfort of the tire 1 during high-speed running can be improved. From this viewpoint, the product (d2×n2) is more preferably not larger than 40 and further preferably not larger than 35.

As shown in FIG. 1 to FIG. 3, in each of the belt plies 7A and 7B, a value (d2×n2/L2) obtained by dividing the above product (d2×n2) by a distance L2 (mm) on the tire equator C from the outer surface 2a of the tread portion 2 to the second belt ply 7B, is preferably not larger than 6. Such a value (d2×n2/L2) is an index of the relationship between the product (d2×n2) and deformation of the tread portion 2 closer to the outer side in the tire radial direction than the belt layer 7 is.

The tire 1 can attain both steering stability and ride comfort during high-speed running by specifying the product (d2×n2) and the distance L2 such that the value (d2×n2/L2) is not larger than 6. Specifically, if the product (d2×n2) is large, the distance L2 is increased. Consequently, vibrations transmitted to the belt plies 7A and 7B are absorbed so that the rigidity of the belt layer 7 can be kept at a high level. Therefore, both steering stability and ride comfort of the tire 1 during high-speed running can be attained. Meanwhile, if the product (d2×n2) is small, the distance L2 is reduced. Consequently, it becomes easy for the belt plies 7A and 7B to generate reaction forces, and the ability to follow a road surface is also improved. Therefore, both steering stability and ride comfort of the tire 1 during high-speed running can be attained.

The belt cord 7a preferably contains, in terms of % by mass, 0.82 to 1.12% of carbon. Such a belt cord 7a is excellent in the balance between strength TS and toughness, and thus the rigidity of the tread portion 2 can be increased, whereby the steering stability of the tire 1 during high-speed running can be improved.

Examples of an element contained in the belt cord 7a include silicon, manganese, phosphorus, sulfur, and the like as well as carbon described above. The belt cord 7a may contain, in terms of % by mass, 0.15 to 0.35% of silicon, 0.30 to 0.60% of manganese, not higher than 0.30% of phosphorus, and not higher than 0.30% of sulfur, for example.

Although the particularly preferred embodiments of the present invention have been described in detail above, the present invention is not limited to the above-described embodiments, and various modifications can be made within the scope of the appended claims.

### EXAMPLES

Tires each having the basic structure shown in FIG. 1 were produced as samples on the basis of the specifications in Table 1 and Table 2. The modulus of each first material and the modulus of each second material in Table 1 and Table 2 are indicated by indexes with the modulus of the first material in comparative example 1 being regarded as 100. Steering stability, ride comfort, low fuel consumption performance, and durability during high-speed running were tested by using the tires produced as samples. Common specifications and test methods are as follows.

### <Common Specifications>

Tire size: 205/55R16
Air pressure: 220 kPa
Test vehicle: front-wheel-drive medium-size passenger car
Cross-sectional shape of band cord: circular shape
Cross-sectional shape of belt cord: circular shape
Material of belt cord: steel

### <Ride Comfort>

Each set of tires produced as samples was mounted on all wheels of the test vehicle, and a test driver made a five-grade sensory evaluation for ride comfort perceived when the test vehicle is caused to run on a test course at 100 km per hour, with the maximum score being 5. The same test was performed by 20 test drivers, and the total score of scores given by the test drivers was calculated. The results are indicated as indexes with the total score in comparative example 1 being regarded as 100. A larger numerical value indicates a better ride comfort during high-speed running.

### <Low Fuel Consumption Performance>

Each set of tires produced as samples was mounted on all the wheels of the test vehicle, and the test vehicle was caused to run on the test course for 10 minutes at 100 km per hour. Then, the distance from the location at which the accelerator was released to the location at which the test vehicle stopped, was measured. The results are indicated as indexes with the distance in comparative example 1 being regarded as 100. A larger numerical value indicates that the distance to the location at which the test vehicle stopped is longer, and as a result, the rolling resistance is lower and the low fuel consumption performance during high-speed running is better.

The results of the tests are indicated in Table 1 and Table 2.

**[Table 1]**

| | Comp. Ex. 1 | Comp. Ex. 2 | Comp. Ex. 3 | Comp. Ex. 4 | Ex. 1 | Ex. 2 |
|---|---|---|---|---|---|---|
| Band cord structure | Stranded wire | Hybrid stranded wire | Stranded wire | Hybrid stranded wire | Stranded wire | Hybrid stranded wire |
| First material of band cord | Nylon | Nylon | Nylon | Nylon | Aramid | Nylon |
| Second material of band cord | - | Aramid | - | Aramid | - | Aramid |
| Modulus of first material (index) | 100 | 33 | 100 | 33 | 1750 | 100 |
| Modulus of second material (index) | - | 1100 | - | 380 | - | 1100 |
| Diameter d1 of band cord (mm) | 0.59 | 0.85 | 0.59 | 0.57 | 1.00 | 1.00 |
| Number n1 of band cords arranged per ply width of 5 cm | 49 | 49 | 49 | 49 | 52 | 52 |
| Distance L1 from tread surface to band ply (mm) | 8.0 | 8.0 | 8.0 | 8.0 | 8.0 | 8.0 |
| Diameter d1 × number n1 | 29 | 42 | 29 | 28 | 52 | 52 |
| Diameter d1 × number n1 × distance L1 | 231 | 333 | 231 | 223 | 416 | 416 |
| Elongation of band cord under load of 66 N (%) | 7.0 | 4.9 | 7.0 | 4.9 | 1.0 | 7.0 |
| Elongation of band cord under load of 198 N (%) | 11.5 | 7.5 | 11.5 | 7.5 | 2.5 | 8.0 |
| Belt cord structure | Stranded wire | Stranded wire | Single wire | Single wire | Single wire | Single wire |
| Diameter d2 of belt cord (mm) | 0.590 | 0.590 | 0.415 | 0.415 | 0.295 | 0.295 |
| Number n2 of belt cords arranged per ply width of 5 cm | 46 | 46 | 46 | 46 | 92 | 92 |
| Distance L2 from tread surface to belt ply (mm) | 9.2 | 9.2 | 9.2 | 9.2 | 9.2 | 9.2 |
| Diameter d2 × number n2 | 27 | 27 | 19 | 19 | 27 | 27 |
| Diameter d2 × number n2 × distance L2 | 250 | 250 | 176 | 176 | 250 | 250 |
| Ride comfort (index) | 100 | 96 | 90 | 86 | 110 | 116 |
| Low fuel consumption performance (index) | 100 | 95 | 105 | 100 | 110 | 110 |
| Combined performance (total) | 200 | 191 | 195 | 186 | 220 | 226 |

**[Table 2]**

| | Ex. 3 | Ex. 4 | Ex. 5 | Ex. 6 | Ex. 7 | Ex. 8 |
|---|---|---|---|---|---|---|
| Band cord structure | Hybrid stranded wire | Hybrid stranded wire | Hybrid stranded wire | Hybrid stranded wire | Hybrid stranded wire | Hybrid stranded wire |
| First material of band cord | Nylon | Nylon | Nylon | Nylon | Nylon | Nylon |
| Second material of band cord | Aramid | Aramid | Aramid | Aramid | Aramid | Aramid |
| Modulus of first material (index) | 33 | 33 | 33 | 50 | 33 | 33 |
| Modulus of second material (index) | 1100 | 1100 | 1100 | 570 | 1100 | 1100 |
| Diameter d1 of band cord (mm) | 0.85 | 0.85 | 0.85 | 0.75 | 0.85 | 0.85 |
| Number n1 of band cords arranged per ply width of 5 cm | 52 | 70 | 20 | 52 | 52 | 52 |
| Distance L1 from tread surface to band ply (mm) | 8.0 | 8.0 | 8.0 | 8.0 | 8.0 | 8.0 |
| Diameter d1 × number n1 | 44 | 60 | 17 | 39 | 44 | 44 |
| Diameter d1 × number n1 × distance L1 | 354 | 476 | 136 | 312 | 354 | 354 |
| Elongation of band cord under load of 66 N (%) | 2.1 | 2.1 | 2.1 | 3.5 | 2.1 | 2.1 |
| Elongation of band cord under load of 198 N (%) | 3.5 | 3.5 | 3.5 | 6.2 | 3.5 | 3.5 |
| Belt cord structure | Single wire | Single wire | Single wire | Single wire | Single wire | Single wire |
| Diameter d2 of belt cord (mm) | 0.295 | 0.295 | 0.295 | 0.295 | 0.200 | 0.295 |
| Number n2 of belt cords arranged per ply width of 5 cm | 92 | 92 | 92 | 92 | 135 | 60 |
| Distance L2 from tread surface to belt ply (mm) | 9.2 | 9.2 | 9.2 | 9.2 | 9.2 | 9.2 |
| Diameter d2 × number n2 | 27 | 27 | 27 | 27 | 27 | 18 |
| Diameter d2 × number n2 × distance L2 | 250 | 250 | 250 | 250 | 248 | 163 |
| Ride comfort (index) | 120 | 110 | 110 | 126 | 118 | 122 |
| Low fuel consumption performance (index) | 115 | 118 | 100 | 115 | 120 | 115 |
| Combined performance (total) | 235 | 228 | 210 | 241 | 238 | 237 |

As a result of the tests, it has been confirmed that each of the tires in the examples has more excellent ride comfort and low fuel consumption performance during high-speed running than the tires in the comparative examples, and the combined performance thereof determined according to the total value of the performances is also more favorable than those of the tires in the comparative examples, so that both ride comfort and low fuel consumption performance during high-speed running can be attained.

## Claims

1. A tire (1) comprising:
a belt layer (7); and
a band layer (9), wherein
the belt layer (7) includes at least one belt ply (7A, 7B),
the belt ply (7A, 7B) includes belt cords (7a) each formed of a single steel wire,
the band layer (9) includes at least one band ply (9A),
the band ply (9A) includes band cords (9a) each formed of an organic fiber and each disposed at an angle not larger than 5° relative to a tire circumferential direction, and
a diameter (d1) in a tire radial direction (a) of each band cord (9a) is not smaller than 0.70 mm,
**characterized in that**
the band cords (9a) have a cross section with a flattened shape in which a ratio between a major axis (Ld) and a minor axis (Sd) of the cross section is not lower than 1.05 and which is disposed so as to be tilted relative to the tire radial direction (a), wherein an axis that is at a smaller angle relative to the tire radial direction (a) out of the minor axis (Sd) and the major axis (Ld) of the band cord (9a) having the cross section with the flattened shape, is defined as the diameter (d1) in the tire radial direction (a).

2. The tire (1) according to claim 1, wherein the diameter (d1) in the tire radial direction (a) of each band cord (9a) is not larger than 1.00 mm.

3. The tire (1) according to claim 1 or 2, wherein each band cord (9a) is a hybrid cord obtained by twisting together a first material and a second material different from the first material.

4. The tire (1) according to claim 1 or 2, wherein the band cords (9a) include: a first cord formed from a first material; and a second cord formed from a second material different from the first material.

5. The tire (1) according to claim 3 or 4, wherein
the first material is a heat-shrinkable material, and
the second material is a non-heat-shrinkable material.

6. The tire (1) according to any one of claims 3 to 5, wherein a modulus of the second material is different from a modulus of the first material.

7. The tire (1) according to any one of claims 3 to 6, wherein
the first material is nylon, and
the second material is aramid.

8. The tire (1) according to any one of claims 1 to 7, wherein the band ply (9A) has 35 to 65 of the band cords (9a) arranged per a ply width of 5 cm.

9. The tire (1) according to any one of claims 1 to 8, wherein, in the band ply (9A), a product (d1×n1×L1) of the diameter (d1) (mm) of the band cord (9a), the number (n1) of the band cords (9a) that are arranged per a ply width of 5 cm, and a distance (L1) (mm) on a tire equator (C) from an outer surface (2a) of a tread portion (2) to the band ply (9A), is not smaller than 150.

10. The tire (1) according to any one of claims 1 to 9, wherein an elongation of each band cord (9a) under a load of 66 N is not lower than 2.5%.

11. The tire (1) according to any one of claims 1 to 10, wherein an elongation of each band cord (9a) under a load of 198 N is not higher than 7.0%.

12. The tire (1) according to any one of claims 1 to 11, wherein a diameter (d2) in the tire radial direction (a) of each belt cord (7a) is 0.16 to 0.50 mm.

13. The tire (1) according to any one of claims 1 to 12, wherein the belt ply (7A, 7B) has 55 to 150 of the belt cords (7a) arranged per a ply width of 5 cm.

14. The tire (1) according to any one of claims 1 to 13, wherein, in the belt ply (7A, 7B), a product (d2×n2) of a diameter (d2) (mm) in the tire radial direction (a) of each belt cord (7a) and the number (n2) of the belt cords (7a) that are arranged per a ply width of 5 cm, is 10 to 45.

## Patentansprüche

1. Reifen (1), umfassend:
eine Gürtellage (7); und
eine Bandlage (9), wobei
die Gürtellage (7) zumindest eine Gürtelschicht (7A, 7B) umfasst,
die Gürtelschicht (7A, 7B) Gürtelkorde (7a) aufweist, die jeweils aus einem einzelnen Stahldraht gebildet sind,
die Bandlage (9) zumindest eine Bandschicht (9A) umfasst,
die Bandschicht (9A) Bandkorde (9a) aufweist, die jeweils aus einer organischen Faser gebildet sind und jeweils unter einem Winkel bezogen auf eine Reifenumfangsrichtung angeordnet sind, der nicht größer als 5° ist, und
ein Durchmesser (d1) jedes Bandkords (9a) in einer Reifenradialrichtung (a) nicht kleiner als 0,70 mm ist,
**dadurch gekennzeichnet, dass**
die Bandkorde (9a) einen Querschnitt mit einer abgeflachten Form aufweisen, in der ein Verhältnis zwischen einer Hauptachse (Ld) und einer Nebenachse (Sd) des Querschnitts nicht kleiner als 1,05 ist und die derart angeordnet ist, dass sie bezogen auf die Reifenradialrichtung (a) geneigt ist, wobei eine Achse von der Nebenachse (Sd) und der Hauptachse (Ld) des Bandkords (9a), der den Querschnitt mit der abgeflachten Form aufweist, welche sich bezogen auf die Reifenradialrichtung (a) bei einem kleineren Winkel befindet, als der Durchmesser (d1) in der Reifenradialrichtung (a) definiert ist.

2. Reifen (1) nach Anspruch 1, wobei der Durchmesser (d1) jedes Bandkords (9a) in der Reifenradialrichtung (a) nicht größer als 1,00 mm ist.

3. Reifen (1) nach Anspruch 1 oder 2, wobei jeder Bandkord (9a) ein Hybridkord ist, der erhalten wird, indem ein erstes Material und ein zweites Material, das von dem ersten Material verschieden ist, miteinander verflochten werden.

4. Reifen (1) nach Anspruch 1 oder 2, wobei die Bandkorde (9a) umfassen: einen ersten Kord, der aus einem ersten Material gebildet ist; und einen zweiten Kord, der aus einem zweiten Material gebildet ist, das von dem ersten Material verschieden ist.

5. Reifen (1) nach Anspruch 3 oder 4, wobei
das erste Material ein mittels Wärme schrumpfbares Material ist und
das zweite Material ein nicht mittels Wärme schrumpfbares Material ist.

6. Reifen (1) nach einem der Ansprüche 3 bis 5, wobei ein Modul des zweiten Materials von einem Modul des ersten Materials verschieden ist.

7. Reifen (1) nach einem der Ansprüche 3 bis 6, wobei
das erste Material Nylon ist und
das zweite Material Aramid ist.

8. Reifen (1) nach einem der Ansprüche 1 bis 7, wobei die Bandschicht (9A) 35 bis 65 der Bandkorde (9a) aufweist, die pro Schichtbreite von 5 cm angeordnet sind.

9. Reifen (1) nach einem der Ansprüche 1 bis 8, wobei in der Bandschicht (9A) ein Produkt (d1xn1xL1) des Durchmessers (d1) (mm) der Bandkorde (9a), der Anzahl (n1) der Bandkorde (9a), die pro Schichtbreite von 5 cm angeordnet sind, und einer Distanz (L1) (mm) an einem Reifenäquator (C) von einer Außenfläche (2a) eines Laufflächenabschnitts (2) bis zu der Bandschicht (9A) nicht kleiner als 150 ist.

10. Reifen (1) nach einem der Ansprüche 1 bis 9, wobei eine Elongation jedes Bandkords (9a) unter einer Last von 66N nicht kleiner als 2,5% ist.

11. Reifen (1) nach einem der Ansprüche 1 bis 10, wobei eine Elongation jedes Bandkords (9a) unter einer Last von 198N nicht größer als 7,0% ist.

12. Reifen (1) nach einem der Ansprüche 1 bis 11, wobei ein Durchmesser (d2) jedes Gürtelkords (7a) in der Reifenradialrichtung (a) 0,16 bis 0,50 mm beträgt.

13. Reifen (1) nach einem der Ansprüche 1 bis 12, wobei die Gürtelschicht (7A, 7B) 55 bis 150 der Gürtelkorde (7a) aufweist, die pro Schichtbreite von 5 cm angeordnet sind.

14. Reifen (1) nach einem der Ansprüche 1 bis 13, wobei in der Gürtelschicht (7A, 7B) ein Produkt (d2xn2) eines Durchmesser (d2) (mm) in der Reifenradialrichtung (a) jedes Gürtelkords (7a) und der Anzahl (n2) der Gürtelkorde (7a), die pro Schichtbreite von 5 cm angeordnet sind, 10 bis 45 beträgt.

## Revendications

1. Pneumatique (1) comprenant :
une couche de ceinture (7) ; et
une couche de bande (9), dans lequel
la couche de ceinture (7) inclut au moins une nappe de ceinture (7A, 7B),
la nappe de ceinture (7A, 7B) inclut des câblés de ceinture (7a) formés chacun d'un fil en acier unique,
la couche de bande (9) inclut au moins une nappe de bande (9A),
la nappe de bande (9A) inclut des câblés de bande (9a) formés chacun d'une fibre organique et disposés chacun sous un angle qui n'est pas supérieur à 5° relativement à une direction circonférentielle du pneumatique, et
un diamètre (d1) dans une direction radiale du pneumatique (a) de chaque câblé de bande (9a) n'est pas inférieur à 0,70 mm,
**caractérisé en ce que**
les câblés de bande (9a) ont une section transversale avec une forme aplatie dans laquelle un rapport entre un axe majeur (Ld) et un axe mineur (Sd) de la section transversale n'est pas inférieur à 1,05 et qui est disposée de manière être inclinée relativement à la direction radiale du pneumatique (a), dans lequel un axe qui est sous un angle inférieur relativement à la direction radiale du pneumatique (a) parmi l'axe mineur (Sd) et l'axe majeur (Ld) du câblé de bande (9a) ayant la section transversale avec la forme aplatie, est défini comme le diamètre (d1) dans la direction radiale du pneumatique (a).

2. Pneumatique (1) selon la revendication 1, dans lequel le diamètre (d1) dans la direction radiale du pneumatique (a) de chaque câblé de bande (9a) n'est pas supérieur à 1,00 mm.

3. Pneumatique (1) selon la revendication 1 ou 2, dans lequel chaque câblé de bande (9a) est un câblé hybride obtenu en torsadant conjointement un premier matériau et un second matériau différent du premier matériau.

4. Pneumatique (1) selon la revendication 1 ou 2, dans lequel les câblés de bande (9a) incluent : un premier câblé formé d'un premier matériau ; et un second câblé formé d'un second matériau différent du premier matériau.

5. Pneumatique (1) selon la revendication 3 ou 4, dans lequel
le premier matériau est un matériau thermorétractable, et
le second matériau est un matériau non thermorétractable.

6. Pneumatique (1) selon l'une quelconque des revendications 3 à 5, dans lequel un module du second matériau est différent d'un module du premier matériau.

7. Pneumatique (1) selon l'une quelconque des revendications 3 à 6, dans lequel
le premier matériau est nylon, et
le second matériau est aramide.

8. Pneumatique (1) selon l'une quelconque des revendications 1 à 7, dans lequel la nappe de bande (9A) a de 35 à 65 des câblés de bande (9a) agencés par largeur de nappe de 5 cm.

9. Pneumatique (1) selon l'une quelconque des revendications 1 à 8, dans lequel, dans la nappe de bande (9A), un produit (d1 ×n1×L1) du diamètre (d1) (mm) du câblé de bande (9a), du nombre (n1) de câblés de bande (9a) qui sont agencés par largeur de nappe de 5 cm, et d'une distance (L1) (mm) sur un équateur de pneumatique (C) depuis une surface extérieure (2a) d'une portion formant bande de roulement (2) jusqu'à la nappe de bande (9A) n'est pas inférieur à 150.

10. Pneumatique (1) selon l'une quelconque des revendications 1 à 9, dans lequel un allongement de chaque câblé de bande (9a) sous une charge de 66 N n'est pas inférieur à 2,5 %.

11. Pneumatique (1) selon l'une quelconque des revendications 1 à 10, dans lequel un allongement de chaque câblé de bande (9a) sous une charge de 198 N n'est pas supérieur à 7,0 %.

12. Pneumatique (1) selon l'une quelconque des revendications 1 à 11, dans lequel un diamètre (d2) dans la direction radiale du pneumatique (a) de chaque câblé de ceinture (7a) est de 0,16 à 0,50 mm.

13. Pneumatique (1) selon l'une quelconque des revendications 1 à 12, dans lequel la nappe de ceinture (7A, 7B) a de 55 à 150 des câblés de ceinture (7a) agencés par largeur de nappe de 5 cm.

14. Pneumatique (1) selon l'une quelconque des revendications 1 à 13, dans lequel, dans la nappe de ceinture (7A, 7B), un produit (d2×n2) d'un diamètre (d2) (mm) dans la direction radiale du pneumatique (a) de chaque câblé de ceinture (7a) et du nombre (n2) de câblés de ceinture (7a) qui sont agencés par largeur de nappe de 5 cm, est de 10 à 45.
